# FASCICULE DE BREVET EUROPEEN

(11) **EP 2 154 012 B1**
(45) Date de publication et mention de la délivrance du brevet: **29.08.2012**
(21) Numéro de dépôt: 09166642.0
(22) Date de dépôt: 28.07.2009
(51) Int. Cl.: B60H 1/00

(54) **Boîtier d'entrée d'air comprenant des moyens d'atténuation de nuisances acoustiques**
Lufteinlassgehäuse mit Mitteln zur Dämpfung der Lärmbelästigungen
Air inlet casing with means for reducing disturbing noises

(30) Priorité: 07.08.2008 FR 0804512
(43) Date de publication de la demande: 17.02.2010
(73) Titulaire: Valeo Systèmes Thermiques, 78321 Le Mesnil Saint Denis (FR)
(72) Inventeur: Naji, Said, 78990, ELANCOURT (FR); Stroehla, Ralph, 96450 Coburg (DE)
(74) Mandataire: Léveillé, Christophe

(56) Documents cités:
- EP-A- 1 449 691
- EP-A- 1 516 758
- WO-A-02/092367
- DE-A1- 19 705 629

## Description

### Domaine technique de l'invention.

La présente invention est du domaine des installations de ventilation, de chauffage et/ou de climatisation, notamment d'un véhicule automobile. Elle a pour objet un boîtier d'entrée d'air constitutif d'une telle installation.

### Etat de la technique.

Dans le domaine automobile, il est courant d'équiper un véhicule d'une installation de ventilation, de chauffage et/ou de climatisation pour réguler les paramètres aérothermiques de l'air contenu dans l'habitacle du véhicule.

Une telle installation comprend un boîtier d'entrée d'air qui est équipé de bouches d'entrée d'air pour admettre au moins un flux d'air à l'intérieur du boîtier, et d'une bouche de sortie d'air pour évacuer le flux d'air depuis le boîtier vers une volute dans laquelle une roue est mise en oeuvre pour aspirer le flux d'air en provenance d'une entrée d'air du boîtier d'entrée d'air. L'air entrant dans la volute est alors propulsé vers un dispositif de traitement thermique logeant un moyen de chauffage de l'air et/ou un moyen de refroidissement de l'air. L'ensemble formé par le boîtier d'entrée d'air, la volute et le dispositif de traitement thermique constitue l'installation de ventilation, chauffage t/ou climatisation. Ainsi, l'air sortant du boîtier d'entrée d'air est évacué vers l'habitacle du véhicule en passant à travers la volute et le dispositif de traitement thermique.

Plus particulièrement, le boîtier d'entrée d'air est pourvu d'une bouche d'entrée d'air extérieur qui permet l'admission à l'intérieur du boîtier d'entrée d'air d'un flux d'air extérieur en provenance de l'extérieur de l'habitacle, et d'une bouche d'entrée d'air de recyclage qui permet l'admission à l'intérieur du boîtier d'entrée d'air d'un flux d'air de recyclage en provenance de l'habitacle. Un volet mobile, tel qu'un volet tambour, permet d'ouvrir ou de fermer la bouche d'entrée d'air extérieur ou la bouche d'entrée d'air de recyclage. Plus particulièrement, le volet est mobile entre une première position extrême fermant la bouche d'entrée d'air extérieur et une deuxième position extrême fermant la bouche d'entrée d'air de recyclage. Un tel boîtier d'entrée d'air selon le préambule de la revendication 1 est connu du document DE 197 05 629.

Le boîtier d'entrée d'air est connecté fluidiquement à une volute logeant une roue pour faire circuler les flux d'air, indifféremment extérieur et/ou de recyclage, depuis une des bouches d'entrée d'air qui leur est affectée, vers la bouche de sortie d'air. Cette bouche de sortie d'air relie le boîtier d'entrée d'air à la volute. L'installation de ventilation, chauffage et/ou climatisation est susceptible d'être agencée selon divers modes de fonctionnement, dont un mode couramment qualifié de confort qui est caractérisé par un débit d'air évacué hors du boîtier d'entrée d'air à travers la bouche de sortie d'air de l'ordre de 200 kg/h.

Un problème général posé dans le domaine réside dans le fait que la roue génère des nuisances sonores qui sont gênantes pour les passagers du véhicule. De telles nuisances sonores sont produites par la roue elle-même et/ou par le flux d'air que cette dernière induit.

Il s'avère que selon la nature du flux d'air admis à l'intérieur du boîtier d'entrée d'air, c'est-à-dire selon le fait que le flux d'air admis à l'intérieur du boîtier d'entrée d'air est un flux d'air extérieur ou de recyclage, les nuisances sonores induites diffèrent. Il en découle que des premières nuisances sonores sont générées lorsque le flux d'air extérieur est admis à l'intérieur du boîtier d'entrée d'air, et que des deuxièmes nuisances sonores sont générées lorsque le flux d'air de recyclage est admis à l'intérieur du boîtier d'entrée d'air. Une telle différence acoustique entre les premières et deuxièmes nuisances sonores est par exemple perceptible par l'utilisateur lorsque l'installation de ventilation, chauffage et/ou climatisation passe d'un mode d'alimentation en air extérieur à un mode d'alimentation en air de l'habitacle via un changement de position du volet, le mode d'alimentation en air extérieur correspondant à un mode dans lequel la bouche d'entrée d'air extérieur est ouverte et la bouche d'entrée d'air de recyclage est fermée par le volet. Ainsi, lorsque l'air entrant dans le boîtier d'entrée air provient d'abord de l'air extérieur puis de l'air de l'habitacle, une différence acoustique est perçue par l'utilisateur. Ce changement de mode d'alimentation d'air du boîtier d'entrée d'air est provoqué soit par une commande de l'utilisateur via un tableau de commande soit par un capteur de pollution logé dans le boîtier d'entrée d'air. En effet, ce dernier est à même de provoquer un changement d'admission d'air à l'intérieur du boîtier du fait du taux de pollution détecté dans le flux d'air entrant dans le boîtier d'entrée d'air, par exemple à partir d'une interdiction d'admission du flux d'air extérieur et d'une autorisation d'admission du flux d'air de recyclage, ou inversement à partir d'une autorisation d'admission du flux d'air extérieur et d'une interdiction d'admission du flux d'air de recyclage. Il s'avère que la perception par l'utilisateur d'une telle différence acoustique constitue une gêne pour lui.

Pour palier à ce problème de différence acoustique entre le mode d'alimentation en air extérieur et le mode d'alimentation en air de l'habitacle, plusieurs solutions ont été proposées.

Une première solution est de modifier le circuit d'air de l'air recyclé afin de diminuer les nuisances sonores. Pour cela, le circuit d'air recyclé se confond en partie avec le circuit d'air extérieur du fait que le boîtier d'entrée d'air ne comporte qu'une seule et unique entrée d'air. Cette unique entrée d'air communique fluidiquement avec un conduit indépendant, placé en amont du boîtier d'entrée d'air selon le sens du flux d'air, dans lequel une entrée d'air extérieur est formée par une grille au niveau du capot du véhicule et une entrée d'air de recyclage est formée par une ouverture reliant l'habitacle et le conduit. Un tel conduit fait partie de la structure même du véhicule. Cette solution implique une modification importante de la structure du véhicule. En effet, puisque l'entrée d'air extérieur et l'entrée d'air de recyclage ne sont plus formées dans le boîtier d'entrée d'air mais dans un conduit séparé, un agencement particulier de ce conduit et de la structure du véhicule est nécessaire et coûteux. En outre, un boîtier d'entrée d'air comportant une unique entrée d'air est atypique et ne correspond pas au standard demandé des constructeurs automobiles. En conséquence, ce design particulier de boîtier d'entrée d'air est coûteux en lui-même puisqu'il ne peut être vendu que pour un véhicule adapté.

Une autre solution consiste à équiper d'un écran acoustique l'entrée d'air de recyclage du boîtier d'entrée d'air. Cette solution implique que la différence acoustique entre un mode d'alimentation en air extérieur et un mode d'alimentation en air de recyclage n'est pas supprimée. En outre, la localisation de cet écran acoustique nécessite un encombrement important pour l'entrée d'air de recyclage.

### Objet de l'invention.

Le but de la présente invention est de proposer un boîtier d'entrée d'air constitutif d'une installation de ventilation, de chauffage et/ou de climatisation d'un véhicule automobile réduisant une gêne acoustique provoquée par un changement d'admission d'air à l'intérieur du boîtier d'entrée d'air. Un autre but de la présente invention est de proposer une installation de ventilation, de chauffage et/ou de climatisation d'un véhicule automobile comprenant un tel boîtier d'entrée d'air.

Le boîtier de la présente invention est un boîtier pour une installation de ventilation, de chauffage et/ou de climatisation destinée à équiper un véhicule automobile. Le boîtier d'entrée d'air est pourvu d'au moins une bouche d'entrée d'air extérieur apte à admettre un flux d'air extérieur à l'intérieur du boîtier et d'au moins une bouche d'entrée d'air de recyclage apte à admettre un flux d'air de recyclage à l'intérieur du boîtier. Afin de choisir quel flux d'air est introduit dans le boîtier d'entrée d'air, un volet est mobile entre une première position extrême fermant la bouche d'entrée d'air de recyclage et une deuxième position extrême fermant la bouche d'entrée d'air extérieur. Le boîtier d'entrée d'air comprend également au moins une bouche de sortie d'air. La bouche de sortie d'air communique fluidiquement avec une volute logeant une roue mise en oeuvre pour aspirer l'air du boîtier d'entrée d'air vers la volute.

Selon la présente invention, la bouche d'entrée d'air de recyclage est munie de moyens d'atténuation d'une différence acoustique, ladite différence acoustique étant provoquée par le passage du volet de la première position extrême à la deuxième position extrême ou de la première position extrême à une position intermédiaire. En d'autres termes, les moyens d'atténuation permettent d'annuler ou de diminuer une différence acoustique entre des premières nuisances sonores générées par le flux d'air extérieur et des deuxièmes nuisances sonores générées par le flux d'air de recyclage.

Les moyens d'atténuation sont des moyens aptes à annuler ladite différence ou tout au moins aptes à faire en sorte que les deuxièmes nuisances sonores soient peu perceptibles. La différence entre le niveau de bruit recyclage et le niveau de bruit extérieur doit être inférieure à 2 dBA sur chaque 1/3 d'octave du domaine audible. Plus généralement, les deuxièmes nuisances sonores n'excèdent pas les premières nuisances sonores de plus de 10%. La mise en oeuvre des moyens d'atténuation permet de réduire les deuxièmes nuisances sonores de quelques décibels, notamment de 1 décibel à 2 décibels, pour faire en sorte que la différence entre les premières et deuxièmes nuisances sonores soit inférieure à 2 décibel pour chaque 1/3 d'octave du domaine audible. Cette réduction est notamment constatée dans une gamme de nuisances sonores comprise entre 20 Hz et 20 kHz. Plus précisément, cette réduction est constatée dans une gamme de 300 Hz à 800 Hz ou dans une gamme de nuisances sonores comprises entre 2 kHz à 3 kHz.

Lesdits moyens d'atténuation constituent en outre avantageusement des moyens d'égalisation d'un premier débit d'air admis à l'intérieur du boîtier à travers la bouche d'entrée d'air extérieur et d'un deuxième débit d'air admis à l'intérieur du boîtier à travers la bouche d'entrée d'air de recyclage.

En effet, la cause majeure pour laquelle le changement de position du volet entre sa première position extrême et sa deuxième position extrême entraîne une différence acoustique perçue par l'utilisateur est une différence de débit d'air entre les deux bouches d'entrée d'air. Cette différence de débit d'air est constatée pour une même vitesse de roue de pulseur et est provoquée par le cheminement différent qu'effectue l'air pour atteindre l'entrée d'air extérieur ou l'entrée d'air de recyclage. Ainsi, les moyens d'atténuation réduisent la section de passage de la bouche d'entrée d'air de recyclage afin de réduire le débit d'air passant par cette bouche.

Ces dispositions sont telles que les moyens d'atténuation permettent de tendre à rendre identiques les premier et deuxième débits d'air et/ou de faire en sorte que le deuxième débit d'air n'excède pas le premier débit d'air de plus de 10%.

D'autres caractéristiques de l'invention sont listées ci-dessous.

Lesdits moyens d'atténuation constituent en outre des moyens d'égalisation d'un premier débit d'air admis à l'intérieur du boîtier à travers la bouche d'entrée d'air extérieur et d'un deuxième débit d'air admis à l'intérieur du boîtier à travers la bouche d'entrée d'air de recyclage.

Lesdits moyens d'atténuation comprennent au moins un organe d'obturation apte à empêcher le passage du flux d'air de recyclage à travers une portion de la bouche d'entrée d'air de recyclage.

L'organe d'obturation est constitué d'un volet mobile entre une position d'ouverture dans laquelle ladite portion est dégagée et une position de fermeture dans laquelle ladite portion est obturée.

Dans un mode confort de réglage du boîtier, au moins un premier volet est placé en position d'ouverture tandis qu'au moins un deuxième volet est placé en position de fermeture.

Le boîtier comporte un organe de commande du volet entre la position d'ouverture et la position de fermeture.

La mise en oeuvre de l'organe de commande est placée sous la dépendance d'un capteur de pollution logé à l'intérieur du boîtier.

Les moyens d'atténuation comprennent au moins un masque placé au débouché de la bouche d'entrée d'air de recyclage.

Le masque est agencé en une grille.

La grille est agencée en une plaque comportant au moins un ajour de conformation indifféremment circulaire, elliptique et/ou polygonale.

Les moyens d'atténuation comprennent au moins un élément plein placé au débouché de la bouche d'entrée d'air de recyclage.

Ledit élément plein est disposé indifféremment en bordure latérale ou en bordure longitudinale ou en zone médiane de la bouche d'entrée d'air de recyclage.

Ledit élément plein étant disposé en bordure latérale, celui-ci comprend au moins deux éléments pleins élémentaires disposés selon deux bords latéraux opposés de la bouche d'entrée d'air de recyclage.

L'invention porte également sur un dispositif de traitement aéraulique pour une installation de ventilation, chauffage et/ou climatisation comprenant un boîtier d'entrée d'air selon l'une quelconque des caractéristiques précédentes et une volute apte à loger une roue, **caractérisé en ce que** le boîtier d'entrée d'air et la volute forment une même et unique pièce.

L'invention porte encore sur une installation de ventilation, de chauffage et/ou de climatisation comprenant un boîtier selon l'une quelconque des précédentes.

### Description des figures.

La présente invention sera mieux comprise, et des détails en relevant apparaîtront, à la lecture de la description qui va être faite de variantes de réalisation en relation avec les figures des planches annexées, dans lesquelles :
La fig.1 est une vue schématique d'un boîtier d'entrée d'air selon la présente invention.
Les fig.2 et fig.3 sont des vues schématiques, respectivement en vue en coupe et en vue de face, d'une entrée d'air de recyclage qui équipe le boîtier illustré sur la fig.1 et qui est pourvue d'une première variante de réalisation de la présente invention.
La fig.4 est une vue schématique en coupe de l'entrée d'air illustrée sur les fig.2 et fig.3, le boîtier étant agencé en mode confort d'utilisation de ladite installation.
La fig.5 est une vue schématique de face d'une entrée d'air de recyclage qui équipe le boîtier illustré sur la fig.1 et qui est pourvue d'une deuxième variante de réalisation de la présente invention.
Les fig.6a à fig.6f sont des illustrations schématiques de face d'une entrée d'air de recyclage qui équipe le boîtier illustré sur la fig.1 et qui est pourvue de formes respectives d'une troisième variante de réalisation de la présente invention.

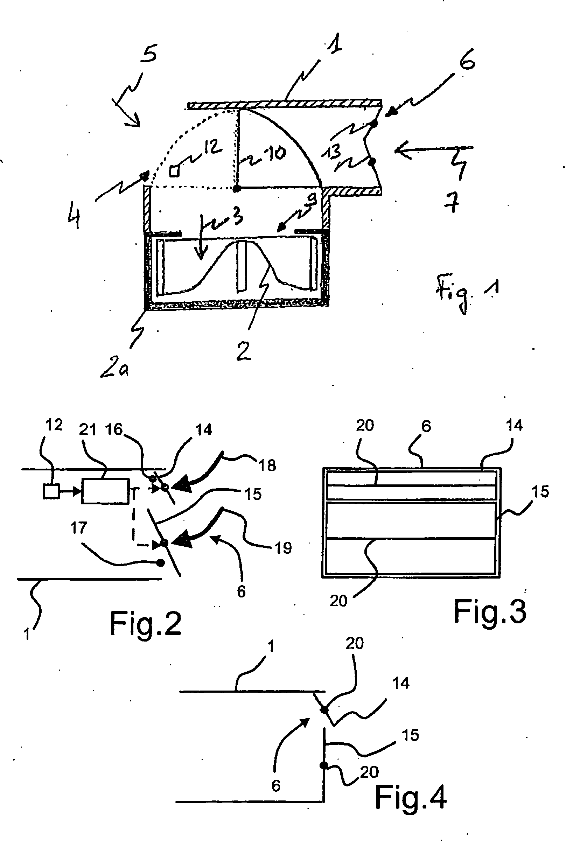

Sur la fig.1, un boîtier d'entrée d'air 1 propre à être relié à une volute 2a logeant une roue 2 est illustré. Cette volute 2a est reliée fluidiquement à un dispositif de traitement thermique non représenté. L'ensemble formé par le boîtier d'entrée d'air 1, la volute 2a et le dispositif de traitement thermique constitue une installation de ventilation, chauffage et/ou climatisation non représentée. En variante, le boîtier d'entrée d'air 1 et la volute 2a forment une unique et même pièce, cette dernière étant reliée au dispositif de traitement thermique. Le boîtier d'entrée d'air 1 est équipé d'une bouche d'entrée d'air extérieur 4 permettant une admission à l'intérieur du boîtier 1 d'un flux d'air extérieur 5 en provenance de l'extérieur de l'habitacle. Le boîtier 1 est également équipé d'une bouche d'entrée d'air de recyclage 6 permettant une admission à l'intérieur du boîtier 1 d'un flux d'air de recyclage 7 en provenance de l'habitacle. Une telle admission du flux d'air, indifféremment extérieur 4 et/ou de recyclage 7, est provoquée par la mise en oeuvre de la roue 2 logée dans la volute 2a. Le flux d'air 3 est le flux d'air issu du boîtier d'entrée d'air 1 s'acheminant vers l'intérieur de la volute 2a via une bouche de sortie d'air 9 pour être ensuite propulsé vers le dispositif de traitement thermique. Entre la bouche de sortie d'air 9 du boîtier d'entrée d'air 1 et ses bouches d'entrée d'air extérieur 4 et de recyclage 6, un volet 10 est mobile entre une première position extrême fermant la bouche d'entrée d'air de recyclage 6 et une deuxième position extrême fermant la bouche d'entrée d'air extérieur 4. Entre ses deux positions extrêmes, le volet mobile (10) peut prendre au moins une position intermédiaire assurant l'introduction à l'intérieur du boîtier d'entrée d'air 1 à la fois d'un flux d'air extérieur 5 et d'un flux d'air de recyclage 7. Lorsque le volet mobile 10 est dans sa première position extrême fermant la bouche d'entrée d'air de recyclage 6, l'installation de ventilation, chauffage et/ou climatisation est alors dans un mode d'alimentation en air extérieur. Ce volet mobile est un volet tambour dans ce mode de réalisation. En variante, ce volet est du type drapeau ou papillon. Ce volet 10 se situe à l'intérieur du boîtier d'entrée d'air 1.

La mise en oeuvre de la roue 2 et/ou la circulation des flux d'air 5, 7 à l'intérieur du boîtier 1 tend à générer des nuisances sonores qui sont susceptibles de se propager vers l'habitacle. De telles nuisances génèrent une gêne pour l'utilisateur du véhicule présent à l'intérieur de l'habitacle. Plus particulièrement, lorsque le boîtier d'entrée d'air 1 admet le flux d'air extérieur 5, des premières nuisances sonores sont générées tandis que lorsque le boîtier d'entrée d'air 1 admet le flux d'air de recyclage 7, des deuxièmes nuisances sonores sont produites, l'amplitude de ces dernières étant différente de celle des premières nuisances sonores. Fréquemment, l'amplitude des deuxièmes nuisances sonores excède de quelques décibels celle des premières nuisances sonores. Cette amplitude est due au parcours différent du flux d'air pour atteindre le boîtier d'entrée d'air selon que le flux d'air provienne de l'extérieur ou que le flux d'air provienne de l'habitacle (mode d'alimentation recyclage). Les parcours diffèrent, ce qui implique pour une même vitesse de la roue 2 des débits différents et/ou des pressions différentes du flux d'air atteignant le boîtier d'entrée d'air 1.

Lors de la mise en oeuvre de ladite installation de ventilation, chauffage et/ou climatisation, et plus particulièrement lors d'une utilisation en mode confort de ladite installation, c'est-à-dire dans le cas où le flux d'air 3 délivré à l'intérieur de la volute 2a et donc à l'intérieur de l'habitacle du véhicule est d'un débit de l'ordre de 200 kg/h, il est fréquent d'avoir à modifier l'admission d'air à l'intérieur du boîtier d'entrée d'air 1. Il est notamment courant d'interdire une admission d'air à travers la bouche d'entrée d'air extérieur 4 pour autoriser uniquement une admission d'air à travers la bouche d'entrée d'air de recyclage 6. Cette modification est par exemple commandée par l'utilisateur ou réalisée automatiquement à partir de la mise en oeuvre d'un capteur de pollution 12 logé à l'intérieur du boîtier d'entrée d'air 1 qui est apte à détecter des impuretés en quantité excessive à l'intérieur du boîtier d'entrée d'air 1. Les impuretés détectées proviennent généralement de l'air extérieur, d'où un changement d'un mode d'alimentation en air extérieur vers un mode d'alimentation en air de l'habitacle.

Pour éviter que l'utilisateur subisse une gêne induite par la perception d'une différence entre les premières et deuxièmes nuisances sonores, il est proposé par la présente invention que la bouche d'entrée d'air de recyclage 6 soit pourvue de moyens d'atténuation 13 de ladite différence. De tels moyens 13 permettent de réduire l'écart existant entre les premières et deuxièmes nuisances sonores, de telle sorte qu'une modification d'admission d'air à l'intérieur du boîtier d'entrée d'air 1 ne provoque pas une gêne pour l'utilisateur.

Lesdits moyens d'atténuation 13 forment par ailleurs des moyens d'égalisation d'un premier débit d'air admis à l'intérieur du boîtier d'entrée d'air 1 à travers la bouche d'entrée d'air extérieur 4 et d'un deuxième débit d'air admis à l'intérieur du boîtier d'entrée d'air 1 à travers la bouche d'entrée d'air de recyclage 6. Ainsi, le deuxième débit d'air, qui tend à être supérieur au premier débit d'air en l'absence desdits moyens d'atténuation 13, est réduit par ces derniers 13 de telle sorte que le deuxième débit d'air n'excède pas le premier débit d'air de plus de 10%.

Selon une première variante de réalisation des moyens d'atténuation 13 illustrée sur les fig.2 à fig.4, ces derniers 13 comprennent deux volets 14,15. Un premier volet 14 est manoeuvrable entre une position de fermeture dans laquelle il obture une première portion 16 de la bouche d'entrée d'air de recyclage 6 et une position d'ouverture dans laquelle il laisse passer une première fraction 18 du flux d'air de recyclage 7 à travers ladite première portion 16. Un deuxième volet 15 est manoeuvrable entre une position de fermeture dans laquelle il obture une deuxième portion 17 de la bouche d'entrée d'air de recyclage 6 et une position d'ouverture dans laquelle il laisse passer une deuxième fraction 19 du flux d'air de recyclage 7 à travers ladite deuxième portion 17, les dites première 16 et deuxième 17 portions constituant conjointement la bouche d'entrée d'air de recyclage 6. Plus particulièrement sur la fig.4, le boîtier d'entrée d'air 1 est agencé en un mode confort d'utilisation de ladite installation de ventilation, chauffage et/ou climatisation, dans laquelle le premier volet 14 est partiellement ouvert tandis que le deuxième volet 15 est fermé. Selon la variante illustrée, les volets 14,15 sont du type papillon mais sont aussi susceptibles d'être du type tambour ou drapeau sans déroger aux règles de la présente invention, les volets 14,15 étant mobiles autour d'un axe de rotation 20 respectif entre leur position d'ouverture et de fermeture. Sur la fig.2, le boîtier d'entrée d'air 1 loge le capteur de pollution 12 qui est en relation avec un organe de commande 21 de la position des deux volets 14,15. Ces dispositions sont telles qu'au cas où le capteur de pollution 12 détecte un excès de pollution à l'intérieur du boîtier d'entrée d'air 1 et où le volet mobile 8 obture totalement la bouche d'entrée d'air de recyclage 6, le capteur de pollution 12 adresse une instruction à l'organe de commande non représenté du volet mobile 8 pour qu'il obture totalement la bouche d'entrée d'air extérieur 4 et adresse également une instruction à l'organe de commande 21 des volets 14, 15, de telle sorte que le premier volet 14 soit placé en position d'ouverture et le deuxième volet 15 soit placé en position de fermeture.

Lorsque la première portion 16 de la bouche d'entrée d'air de recyclage 6 est complètement ouverte et que la deuxième portion 17 est totalement obturée par le deuxième volet 15, le niveau de bruit alors obtenu lors du passage de l'air à travers la bouche d'entrée d'air de recyclage 6 est le même que celui obtenu lors du passage de l'air à travers la bouche d'entrée d'air extérieur 4. La première portion 16 correspond donc à la section de passage de la bouche d'entrée d'air de recyclage 6 pour laquelle la différence de nuisances acoustiques entre un mode d'alimentation en air extérieur et un mode d'alimentation en air de recyclage pour un mode dit de confort est nulle ou quasi inexistante.

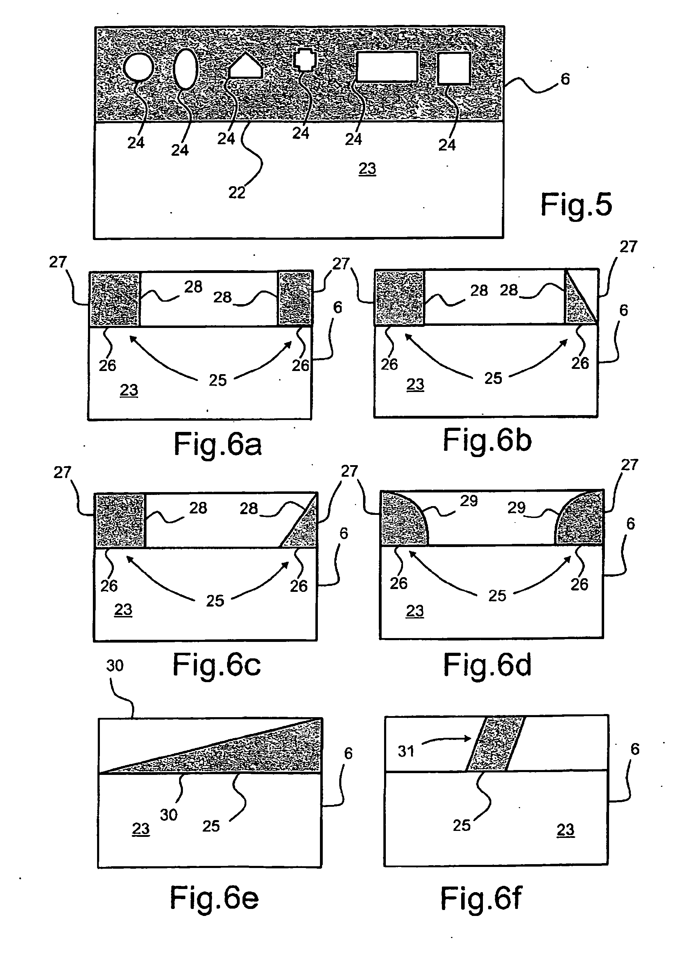

Selon une deuxième variante de réalisation des moyens d'atténuation 13 illustrée sur la fig.5, ces derniers 13 comprennent un masque 22 obturant partiellement un débouché 23 de la bouche d'entrée d'air de recyclage 6. Le masque 22 est agencé en une grille comportant au moins un ajour 24 pour le passage du flux d'air de recyclage 7. L'ajour 24 comporte une conformation de nature relativement quelconque, indifféremment circulaire, elliptique et/ou polygonale, voire une combinaison de ces conformations. La somme des sections de passages du ou des ajours 24 doit correspondre à la valeur de la section de passage de la première portion 16 pour atteindre la diminution ou l'inexistante de différences acoustiques entre les modes d'alimentation en air. Il est à noter que le masque 22 permet de réduire le bruit directement transmis par la roue 2. En effet ce masque 22 assure une absorption de certaines ondes acoustiques créées directement par le fonctionnement de la roue 2.

Selon une troisième variante de réalisation des moyens d'atténuation 13 illustrée sur les fig.6a à fig.6f, ces derniers 13 comprennent un élément plein 25 placé au débouché 23 de la bouche d'entrée d'air de recyclage 6. Un tel élément plein 25 est caractérisé par le fait qu'il interdit un passage d'air à son travers et ne comporte aucun ajour. Selon les formes de réalisation illustrées sur les fig. 6a à fig. 6d, l'élément plein 25 comprend deux éléments pleins élémentaires 26 disposés selon deux bords latéraux 27 opposés de la bouche d'entrée d'air de recyclage 6. Sur les fig. 6a à fig. 6c, les éléments pleins élémentaires 26 comportent un profil défini par des lignes droites 28, tandis que sur la fig. 6d, les éléments pleins élémentaires comportent un profil chacun défini par au moins une ligne courbe 29. Sur la fig.6e, l'élément plein 25 s'étend entre deux bords longitudinaux opposés 30 de la bouche d'entrée d'air de recyclage 6. Sur la fig.6f, l'élément plein 25 s'étend en zone médiane 31 de la bouche d'entrée d'air de recyclage 6.

Selon d'autres variantes de réalisation de la présente invention, les moyens d'atténuation sont susceptibles d'être définis par l'une quelconque des combinaisons des trois variantes de réalisation précitées.

## Revendications

1. Boîtier (1) d'entrée d'air (1) pour une installation de ventilation, de chauffage et/ou de climatisation, ledit boîtier (1) étant pourvu d'au moins une bouche d'entrée d'air extérieur (4) apte à admettre un flux d'air extérieur (5) à l'intérieur du boîtier (1), d'au moins une bouche d'entrée d'air de recyclage (6) apte à admettre un flux d'air de recyclage (7) à l'intérieur du boîtier (1), une bouche de sortie d'air (9) et d'au moins un volet mobile (10) entre une première position extrême fermant la bouche d'entrée d'air de recyclage (6) et une deuxième position extrême fermant la bouche d'entrée d'air extérieur (4), **caractérisé en ce que** la bouche d'entrée d'air de recyclage (6) est munie de moyens d'atténuation (13) d'une différence acoustique, ladite différence acoustique étant provoquée par la passage du volet mobile (10) de la première position extrême à la deuxième position extrême ou de la première position extrême à une position intermédiaire.

2. Boîtier (1) selon la revendication précédente, dans lequel lesdits moyens d'atténuation (13) constituent en outre des moyens d'égalisation d'un premier débit d'air admis à l'intérieur du boîtier (1) à travers la bouche d'entrée d'air extérieur (4) et d'un deuxième débit d'air admis à l'intérieur du boîtier (1) à travers la bouche d'entrée d'air de recyclage (6).

3. Boîtier (1) selon l'une quelconque des revendications précédentes, dans lequel lesdits moyens d'atténuation (13) comprennent au moins un organe d'obturation (14, 15) apte à empêcher le passage du flux d'air de recyclage à travers une portion (16,17) de la bouche d'entrée d'air de recyclage (6).

4. Boîtier (1) selon la revendication 3, dans lequel l'organe d'obturation est constitué d'un volet mobile (14,15) entre une position d'ouverture dans laquelle ladite portion (16,17) est dégagée et une position de fermeture dans laquelle ladite portion (16,17) est obturée.

5. Boîtier (1) selon la revendication 4, dans lequel dans un mode confort de réglage du boîtier (1), au moins un premier volet (14) est placé en position d'ouverture tandis qu'au moins un deuxième volet (15) est placé en position de fermeture.

6. Boîtier (1) selon l'une quelconque des revendications 4 à 5, dans lequel il comporte un organe de commande (21) du volet (14,15) entre la position d'ouverture et la position de fermeture.

7. Boîtier (1) selon la revendication 6, dans lequel la mise en oeuvre de l'organe de commande (21) est placée sous la dépendance d'un capteur de pollution (12) logé à l'intérieur du boîtier (1).

8. Boîtier (1) selon l'une quelconque des revendications précédentes, dans lequel les moyens d'atténuation (13) comprennent au moins un masque (22) placé au débouché (23) de la bouche d'entrée d'air de recyclage (6).

9. Boîtier (1) selon la revendication 8, dans lequel le masque (22) est agencé en une grille.

10. Boîtier (1) selon la revendication 9, dans lequel la grille (22) est agencée en une plaque comportant au moins un ajour (24) de conformation indifféremment circulaire, elliptique et/ou polygonale.

11. Boîtier (1) selon l'une quelconque des revendications 1 à 7, dans lequel les moyens d'atténuation (13) comprennent au moins un élément plein (25) placé au débouché (23) de la bouche d'entrée d'air de recyclage (6).

12. Boîtier (1) selon la revendication 11, dans lequel ledit élément plein (25) est disposé indifféremment en bordure latérale (27) ou en bordure longitudinale (30) ou en zone médiane (31) de la bouche d'entrée d'air de recyclage (6).

13. Boîtier (1) selon la revendication 12, dans lequel ledit élément plein (25) étant disposé en bordure latérale (26), celui-ci (25) comprend au moins deux éléments pleins élémentaires (29) disposés selon deux bords latéraux (27) opposés de la bouche d'entrée d'air de recyclage (6).

14. Dispositif de traitement aéraulique pour une installation de ventilation, chauffage et/ou climatisation comprenant un boîtier d'entrée d'air (1) selon l'une quelconque des revendications précédentes et une volute (2a) apte à loger une roue (2), **caractérisé en ce que** le boîtier d'entrée d'air et la volute (2a) forment une même et unique pièce.

15. Installation de ventilation, de chauffage et/ou de climatisation comprenant un boîtier (1) selon l'une quelconque des revendications 1 à 13 ou un dispositif de traitement aéraulique selon la revendication 14.

## Claims

1. Air inlet casing (1) for a heating, ventilation and/or air-conditioning installation, said casing (1) being provided with at least one external-air inlet opening (4) capable of admitting a flow of external air (5) into the casing (1), with at least one recycling-air inlet opening (6) capable of admitting a flow of recycling air (7) into the casing (1), an air outlet opening (9) and at least one movable flap (10) that can move between an extreme first position that closes the recycling-air inlet opening (6) and an extreme second position that closes the external-air inlet opening (4),
**characterized in that** the recycling-air inlet opening (6) is equipped with attenuating means (13) for reducing an acoustic difference, the said acoustic difference being caused by the movement of the movable flap (10) from the extreme first position to the extreme second position or from the extreme first position to an intermediate position.

2. Casing (1) according to the preceding claim, in which the said attenuating means (13) further constitute means of equalizing a first flow rate of air admitted into the casing (1) through the external-air inlet opening (4) and a second flow rate of air admitted into the casing (1) through the recycling-air inlet opening (6).

3. Casing (1) according to either one of the preceding claims, in which the said attenuating means (13) comprise at least one shut-off member (14, 15) capable of preventing the flow of recycling air from passing through a portion (16, 17) of the recycling-air inlet opening (6).

4. Casing (1) according to Claim 3, in which the shut-off member consists of a movable flap (14, 15) able to move between an open position in which the said portion (16, 17) is uncovered and a closed position in which the said portion (16, 17) is shut off.

5. Casing (1) according to Claim 4, in which in a comfort mode setting of the casing (1), at least one first flap (14) is placed in an open position whereas at least one second flap (15) is placed in a closed position.

6. Casing (1) according to either one of Claims 4 to 5, in which it comprises a control member (21) for controlling the flap (14, 15) between the open position and the closed position.

7. Casing (1) according to Claim 6, in which operation of the control member (21) is placed under the dependency of a pollution sensor (12) housed inside the casing (1).

8. Casing (1) according to any one of the preceding claims, in which the attenuation means (13) comprise at least one mask (22) positioned at the mouth (23) of the recycling-air inlet opening (6).

9. Casing (1) according to Claim 8, in which the mask (22) is arranged as a grille.

10. Casing (1) according to Claim 9, in which the grille (22) is arranged as a plate having at least one aperture (24) shaped indifferently as a circle, ellipse and/or polygon.

11. Casing (1) according to any one of Claims 1 to 7, in which the attenuation means (13) comprise at least one solid element (25) positioned at the mouth (23) of the recycling-air inlet opening (6).

12. Casing (1) according to Claim 11, in which the said solid element (25) is positioned indifferently along a lateral edge (27) or along a longitudinal edge (30) or in a central region (31) of the recycling-air inlet opening (6).

13. Casing (1) according to Claim 12, in which with the said solid element (25) positioned along the lateral edge (26), this element (25) comprises at least two elementary solid elements (29) positioned along two opposite lateral edges (27) of the recycling-air inlet opening (6).

14. Air treatment device for a heating, ventilation and/or air conditioning installation comprising an air inlet casing (1) according to any one of the preceding claims and a volute casing (2a) capable of housing an impeller (2), **characterized in that** the air inlet casing and the volute casing (2a) form one and the same component.

15. Heating, ventilation and/or air conditioning installation comprising a casing (1) according to any one of Claims 1 to 13, or an air treatment device according to Claim 14.

## Patentansprüche

1. Lufteinlassgehäuse (1) für eine Lüftungs-, Heiz- und/oder Klimaanlage, wobei das Gehäuse (1) mit mindestens einer Außenluft-Einlassöffnung (4), die einen Außenluftstrom (5) ins Innere des Gehäuses (1) einlassen kann, mindestens einer Umwälzluft-Einlassöffnung (6), die einen Umwälzluftstrom (7) ins Innere des Gehäuses (1) einlassen kann, einer Luftaustrittsöffnung (9) und mindestens einer Klappe (10) versehen ist, die zwischen einer ersten Endstellung, die die Umwälzluft-Einlassöffnung (6) verschließt, und einer zweiten Endstellung beweglich ist, die die Außenluft-Einlassöffnung (4) verschließt,
**dadurch gekennzeichnet, dass** die Umwälzluft-Einlassöffnung (6) mit Dämpfungseinrichtungen (13) einer akustischen Differenz versehen ist, wobei die akustische Differenz durch den Übergang der beweglichen Klappe (10) von der ersten Endstellung in die zweite Endstellung oder von der ersten Endstellung in eine Zwischenstellung verursacht wird.

2. Gehäuse (1) nach dem vorhergehenden Anspruch, bei dem die Dämpfungseinrichtungen (13) außerdem Ausgleichseinrichtungen eines ersten Luftdurchsatzes, der durch die Außenluft-Einlassöffnung (4) ins Innere des Gehäuses (1) eingelassen wird, und eines zweiten Luftdurchsatzes bilden, der durch die Umwälzluft-Einlassöffnung (6) ins Innere des Gehäuses (1) eingelassen wird.

3. Gehäuse (1) nach einem der vorhergehenden Ansprüche, bei dem die Dämpfungseinrichtungen (13) mindestens ein Verschlussorgan (14, 15) enthalten, das den Durchgang des Umwälzluftstroms durch einen Teil (16, 17) der Umwälzluft-Einlassöffnung (6) verhindern kann.

4. Gehäuse (1) nach Anspruch 3, bei dem das Verschlussorgan aus einer Klappe (14, 15) besteht, die zwischen einer Öffnungsstellung, in der der Teil (16, 17) freigelegt ist, und einer Schließstellung beweglich ist, in der der Teil (16, 17) verschlossen ist.

5. Gehäuse (1) nach Anspruch 4, bei dem in einem Einstellkomfortmodus des Gehäuses (1) mindestens eine erste Klappe (14) in der Öffnungsstellung angeordnet ist, während mindestens eine zweite Klappe (15) in der Schließstellung angeordnet ist.

6. Gehäuse (1) nach einem der Ansprüche 4 bis 5, bei dem es ein Steuerorgan (21) der Klappe (14, 15) zwischen der Öffnungsstellung und der Schließstellung aufweist.

7. Gehäuse (1) nach Anspruch 6, bei dem die Anwendung des Steuerorgans (21) von einem Verschmutzungssensor (12) abhängt, der im Inneren des Gehäuses (1) angeordnet ist.

8. Gehäuse (1) nach einem der vorhergehenden Ansprüche, wobei die Dämpfungseinrichtungen (13) mindestens eine Maske (22) enthalten, die an der Mündung (23) der Umwälzluft-Einlassöffnung (6) angeordnet ist.

9. Gehäuse (1) nach Anspruch 8, bei dem die Maske (22) als Gitter ausgebildet ist.

10. Gehäuse (1) nach Anspruch 9, bei dem dass Gitter (22) als eine Platte eingerichtet ist, die mindestens einen Durchbruch (24) aufweist, der unterschiedslos kreisförmig, elliptisch und/oder polygonal ausgeführt ist.

11. Gehäuse (1) nach einem der Ansprüche 1 bis 7, bei dem die Dämpfungseinrichtungen (13) mindestens ein massives Element (25) enthalten, das an der Mündung (23) der Umwälzluft-Einlassöffnung (6) angeordnet ist.

12. Gehäuse (1) nach Anspruch 11, bei dem das massive Element (25) unterschiedslos am Seitenrand (27) oder am Längsrand (30) oder im Mittelbereich (31) der Umwälzluft-Einlassöffnung (6) angeordnet ist.

13. Gehäuse (1) nach Anspruch 12, bei dem das massive Element (25), wenn es am Seitenrand (26) angeordnet ist, mindestens zwei elementare massive Elemente (29) enthält, die gemäß zwei gegenüberliegenden Seitenrändern (27) der Umwälzluft-Einlassöffnung (6) angeordnet sind.

14. Vorrichtung zur Luftzirkulationsverarbeitung für eine Lüftungs-, Heizund/oder Klimaanlage, die ein Lufteinlassgehäuse (1) nach einem der vorhergehenden Ansprüche und ein Spiralgehäuse (2a) enthält, das ein Rad (2) aufnehmen kann, **dadurch gekennzeichnet, dass** das Lufteinlassgehäuse und das Spiralgehäuse (2a) ein einziges Bauteil bilden.

15. Lüftungs-, Heiz- und/oder Klimaanlage, die ein Gehäuse (1) nach einem der Ansprüche 1 bis 13 oder eine Vorrichtung zur Luftzirkulationsverarbeitung nach Anspruch 14 enthält.
